# EUROPEAN PATENT SPECIFICATION

(11) **EP 2 254 214 B1**
(45) Date of publication and mention of the grant of the patent: **06.07.2022**
(21) Application number: 09011054.5
(22) Date of filing: 28.08.2009
(51) Int. Cl.: H02H 1/06, H02H 3/093, G06F 1/32, G06F 1/06, G06F 1/24, H02H 1/00

(54) **Circuit breaker and method of controlling its operation**
Schutzschalter und Steuerungsverfahren für den Betrieb
Interrupteur et son procédé de commande de fonctionnement

(30) Priority: 20.05.2009 JP 2009122070
(43) Date of publication of application: 24.11.2010
(73) Proprietor: Mitsubishi Electric Corporation, Chiyoda-ku Tokyo 100-8310 (JP)
(72) Inventor: Nomura, Toshimitsu, Tokyo 100-8310 (JP); Tsukamoto, Tatsuyuki, Tokyo 102-0073 (JP)
(74) Representative: Hoffmann Eitle

(56) References cited:
- EP-A2- 1 589 629
- DE-A1- 19 726 639
- US-A- 5 737 588

## Description

### BACKGROUND OF THE INVENTION

### TECHNICAL FIELD

This invention relates to a circuit breaker in which a microcomputer calculates a tripping time corresponding to the level of current flowing in an AC circuit and a method of controlling its operation.

### BACKGROUND ART

As a conventional circuit breaker, there has been a circuit breaker having a current transformer for detecting current for each phase flowing in an AC circuit, a rectifier circuit and a power supply circuit for full-wave rectifying the secondary output from the current transformer, a current detection resistor for supplying a voltage in proportion to the current for each phase, an amplifier circuit for amplifying the voltage output detected in each phase before inputting it into a microcomputer, and the microcomputer for deciding a tripping time according to the size of the detected current level, in which the current for each phase flowing in the AC circuit is detected, an overcurrent trip signal is supplied according to the detected current level, and the AC circuit is interrupted through a switching unit (for example, refer to Patent Document 1). In this circuit breaker, the microcomputer has a function of reducing power consumption, which is a low power consumption mode, and the low power consumption mode includes three types: a sleep mode, a software standby mode, and a hardware standby mode, and additionally an operation mode for performing a low power consumption operation by an oscillation circuit which oscillates a low speed internal clock, included in the microcomputer. Here, the microcomputer operative in this operation mode by the low speed internal clock starts the operation according to a low speed clock from the built-in oscillation circuit at power-on. Further, a high speed clock used for usual operation is supplied from an external oscillation circuit connected to the outside of the microcomputer.

### [Prior Art Documents]

### [Patent Document]

[Patent Document 1] Japanese Patent Laid-Open No. 2000-113796

EP 1 589 629 A2 teaches a self-supplied electronic protection device for automatic circuit-breakers which comprises an electrical network supply device to be protected by the circuit-breaker's control device comprising at least two levels of operation, wherein the first level is associated with the function of protection from instantaneous short circuit and a second level is associated to further functions of said protection device. Upon closing the circuit, immediately the first level of operation is started and after a controlled period of time also the second level of operation of said control device may be started.

DE 19726639A1 teaches an over-current trigger with an oscillator controlling microprocessor. By this additional oscillator, the microprocessor device, upon switching on the power circuit, is immediately operable so that undelayed triggering is possible.

### SUMMARY OF THE INVENTION

In the conventional circuit breaker including an oscillation circuit which generates a low speed internal clock in a low power consumption mode and a microcomputer capable of performing an operation in the low power consumption mode, an external oscillation circuit starts oscillation in reply to a low speed clock supplied from the internal oscillation circuit, and a high speed clock from the external oscillation circuit is supplied to the microcomputer as an operation clock after elapse of an oscillation stable time, thus starting the overcurrent detecting function of the microcomputer after power-on. In this case, the waiting processing starting with the oscillation of the external oscillation circuit up until the oscillation stable time is performed according to a low speed clock from the internal oscillation circuit, that is, an operation clock, and therefore, the waiting time during the oscillation stable time depends on the oscillation frequency accuracy of the internal oscillation circuit.

When the inventor et al. investigated the accuracy of the oscillation frequency in the internal oscillation circuit, they found that variations were large with the minimum value of 30 kHz and the maximum value of 250 kHz with respect to the set value 125 kHz. When the waiting time for stabilizing the oscillation in the external oscillation circuit is set, for example, at 0.2 ms, the set value for the oscillation stable time according to the internal clock has to be set at 250 kHz that is the maximum value of the internal clock, in order to secure the oscillation stable time. When the actual operation clock becomes 30 kHz that is the minimum value of the internal clock, however, the waiting time actually becomes 1.6 ms as for the set value 0.2 ms and the overcurrent detecting function starts with a delay of 1.4 ms (= 1. 6 ms - 0.2 ms) . Therefore, there arises a problem that the detection delay of 1.4 ms causes an increase in the interrupting current at a time of interruption and the passing energy due to the interrupting current in an instantaneous tripping operation when a short circuit happens in the turn-on mode of a circuit breaker, which disadvantageously affects the interruption performance of the circuit breaker.

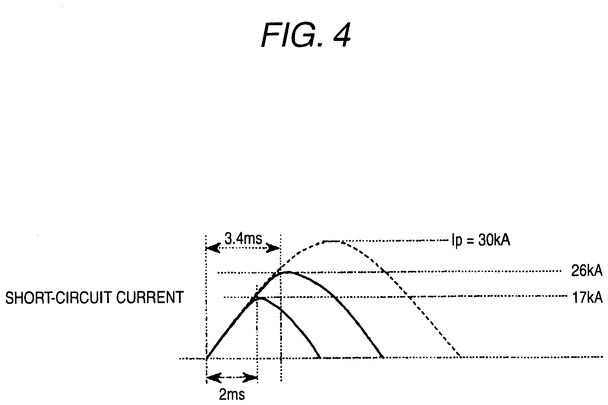

Fig. 4 is an example showing a relation of the interrupting currents when the operation delay of 1.4 ms happens in the overcurrent detection with the estimated short-circuit current Ip defined as 30 kA. The short-circuit current is 17 kA in the case of a 2 ms operating time without the 1.4 ms delay from the short-circuit current starting up to the interruption after an overcurrent is detected, while the short-circuit current is 26 kA in the case of a 3.4 ms operating time with the 1.4 ms delay. The difference therebetween is about 9 kA.

In order to solve the above-mentioned problem in the conventional circuit breaker, the invention aims to provide a circuit breaker having an internal oscillation circuit for generating a low speed internal clock and a microcomputer capable of performing an operation in a low power consumption mode and a method of controlling its operation which can perform the overcurrent detecting operation speedily after power-on without depending on the accuracy of the oscillation frequency in the internal oscillation circuit and reduce the interrupting current at a time of interruption and the passing energy due to the interrupting current.

The invention concerns a circuit breaker according to independent claim 1, as well as a method according to independent claim 2.

In the circuit breaker according to the invention, after the power coming through the current transformer from the current flowing in the AC circuit is supplied from the power supply circuit to the microcomputer, the timing circuit is used in order to perform the waiting processing for the oscillation stable time of the external clock, hence to switch from the internal clock to the external clock in the minimum waiting time. Therefore, it is possible to perform the overcurrent detection processing speedily after power-on and to reduce the interrupting current at a time of interruption and the passing energy due to the interrupting current.

### BRIEF DESCRIPTION OF THE DRAWINGS

Fig. 1 is a block diagram showing a circuit breaker according to a first embodiment of the invention.
Fig. 2 is a block diagram showing the structure of a timing circuit in Fig. 1 .
Fig. 3 is an input and output waveform diagram showing the flow of an operation clock in Fig. 1 .
Fig. 4 is a waveform diagram showing a relation of interrupting current values when an operation start delay happens in an overcurrent detecting function.

### DESCRIPTION OF THE PREFERRED EMBODIMENTS

### First Embodiment

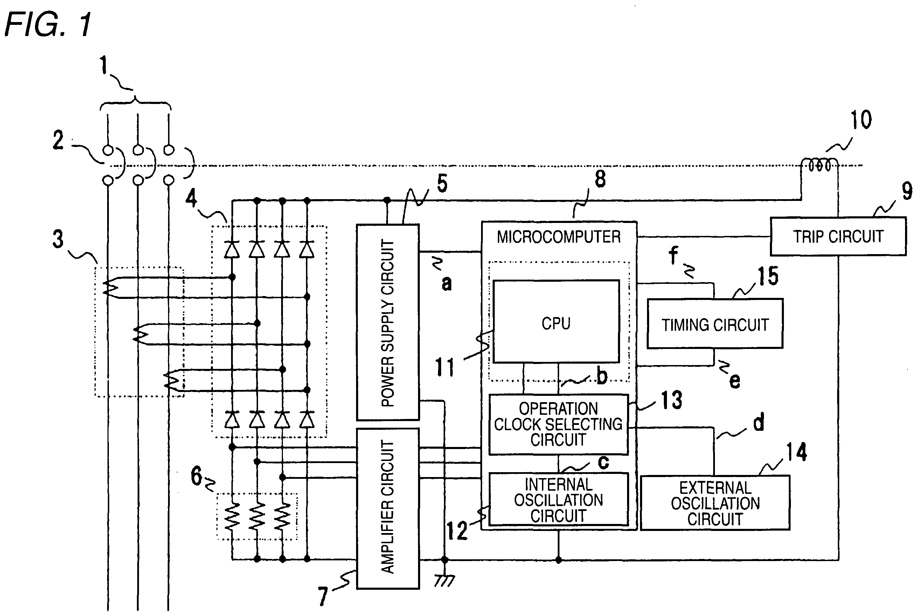

Fig. 1 is a block diagram showing a circuit breaker according to the first embodiment of the invention. In Fig. 1, a switching contact 2 of the circuit breaker includes three poles of switching contacts and they are connected to AC circuit 1 for three phases, and when an electromagnetic device 10 is urged, they are opened to interrupt the AC circuit 1. Current transformers 3 supply each electric current signal in proportion to each current of the AC circuit 1.

Rectifier circuits 4 as rectifying means full-wave rectify the respective current signals supplied from the respective current transformers 3 and input them to a power supply circuit 5. The power supply circuit 5 generates an operation power used for electric circuits within the circuit breaker according to the inputs from the rectifier circuits 4 and supplies the operation power to a microcomputer 8 described later.

A current detecting resistor 6 is formed by detecting resistors corresponding to the respective current transformers 3 for the respective phases and they convert the current signals corresponding to the respective currents into respective voltage signals. The voltage signals converted by the current detecting resistor 6 are amplified by an amplifier circuit 7 and converted into digital signals by an A/D converter included in the microcomputer 8, and thereafter, based on the respective digital signals, overcurrent and short-circuit current in the AC circuit 1 is detected through digital processing.

When the microcomputer 8 detects overcurrent or a short-circuit accident in the AC circuit 1, a trip circuit 9 is given a trip signal from the microcomputer 8 and urges the electromagnetic device 10. The urged electromagnetic device 10 opens the switching contact 2 by the electromagnetic force to interrupt the AC circuit 1.

The microcomputer 8 includes a CPU 11 for calculating a tripping time corresponding to the level of current flowing in the AC circuit 1, an internal oscillation circuit 12 which generates a low speed internal clock as a clock for operating the CPU 11 after power-on, and an operation clock selecting circuit 13 which selectively supplies the low speed internal clock from the internal oscillation circuit 12 and a high speed external clock from an external oscillation circuit 14 as the operation clock of the CPU 11.

The external oscillation circuit 14 and a timing circuit 15 are provided outside of the microcomputer 8 and the timing circuit 15 is set at a time corresponding to the oscillation stable time from start-up of the external oscillation circuit 14 to the time when its oscillation gets stable in order to perform the waiting processing during the above time.

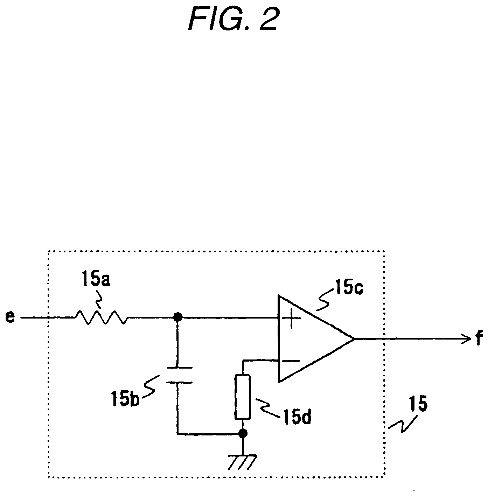

Here, a structure example of the timing circuit 15 is shown in Fig. 2. In Fig. 2, the timing circuit 15 is formed by a CR delay circuit including a resistor 15a and a condenser 15b for performing the oscillation stable time waiting processing and a comparator 15c for comparing an output signal of the CR delay circuit with a direct current reference voltage 15d.

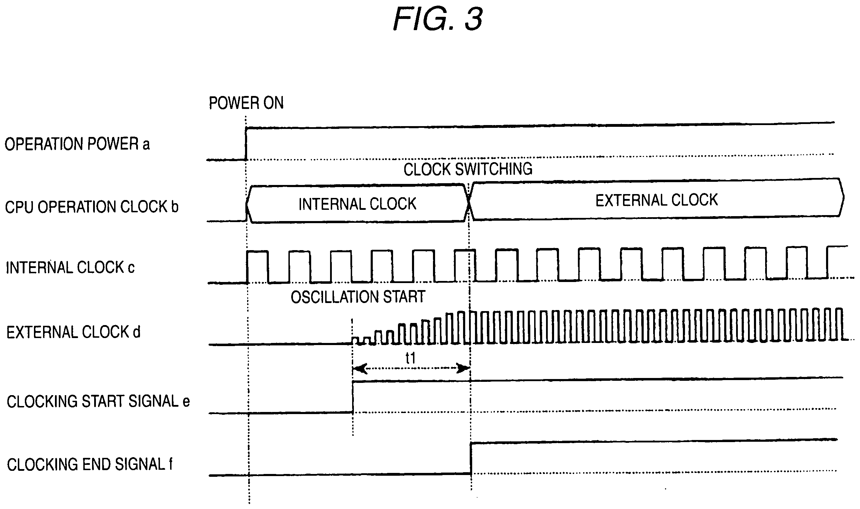

Next, an operation of the circuit breaker according to the first embodiment of the invention will be described. Fig. 3 is an input and output waveform diagram showing each flow of the operation clock to be supplied to the CPU 11 and the others.

In Fig. 1 and Fig. 3, when the switching contacts 2 of the circuit breaker are turned on, output currents are supplied from the respective current transformers 3 corresponding to the alternate currents for the three phases flowing in the AC circuit 1 and they are full-wave rectified by the rectifier circuits 4 to be supplied to the power supply circuit 5. The power supply circuit 5 generates an operation power used for electric circuits within the circuit breaker according to the input and supplies the operation power a to the microcomputer 8.

The internal oscillation circuit 12 starts the oscillation when the operation power a is supplied to the microcomputer 8, and the low speed internal clock c is automatically selected by the operation clock selecting circuit 13 to be supplied to the CPU 11 as the CPU operation clock b, thereby starting the operation. In a state where the clock source of the CPU operation clock b of the CPU 11 is the internal oscillation circuit 12, the oscillation of the external oscillation circuit 14 gets started and at the same time, a clocking start signal e is supplied to the timing circuit 15. The time period from the input point of the clocking start signal e to the output point of the clocking end signal f in the timing circuit 15 is set at the timing (for example, 0.3 ms) corresponding to the oscillation stable time t1 in the external oscillation circuit 14, and the operation clock selecting circuit 13 is switched to the external clock d at the output point of the clocking end signal f that is the output signal from the timing circuit 15.

The overcurrent detection can be started by switching the CPU operation clock b of the CPU 11 from the low speed internal clock c (for example, 125 KHz) to the high speed external clock d (for example, 12 MHz), and therefore, the overcurrent detection processing can be performed speedily after power-on, without depending on the accuracy of oscillation frequency in the internal oscillation circuit 12.

As mentioned above, according to the circuit breaker of the first embodiment of the invention, after the power coming through the current transformer 3 from the current flowing in the AC circuit 1 is supplied from the power supply circuit 5 to the microcomputer, the timing circuit 15 is used in order to perform the waiting processing for the oscillation stable time of the external clock, hence to switch from the internal clock to the external clock in the minimum waiting time. Therefore, it is possible to perform the overcurrent detection processing speedily after power-on and to reduce the interrupting current at a time of interruption and the passing energy due to the interrupting current.

## Claims

1. A circuit breaker including a microcomputer (8) which includes an internal oscillation circuit (12) for generating an internal clock for performing an operation in a low power consumption mode, the circuit breaker comprising further a current transformer (3) arranged such that
power coming through the current transformer (3) from current flowing in an AC circuit (1) is supplied to an electric circuit including the microcomputer (8), wherein
the microcomputer (8) is configured to calculate a tripping time corresponding to a level of current flowing in the AC circuit (1), the circuit breaker further comprising
an external oscillation circuit (14) which is configured to generate an external clock with higher speed than that of the internal clock, provided outside of the microcomputer (8) for letting the microcomputer (8) perform an operation in a usual operation mode,
a timing circuit (15) which is preset to an oscillation stable time from start-up of the external oscillation circuit (14) up to a time when oscillation of the external oscillation circuit (14) gets stable, and an operation clock selecting circuit (13) which is configured to selectively supply the internal clock from the internal oscillation circuit (12) as an operation clock of the microcomputer (8) at start-up of the microcomputer (8) and the external clock from the external oscillation circuit (14) as the operation clock of the microcomputer (8) after elapse of the time to which the timing circuit (15) is set, wherein
the timing circuit (15) is provided outside of the microcomputer (8) and the operation clock selecting circuit (13) is included in the microcomputer (8), and the timing circuit (15) is formed by a CR delay circuit including a resistor (15a) and a condenser (15b), a direct current reference voltage (15d) for detecting an output level of an output signal from the CR delay circuit, and a comparator (15c) which is configured to compare the output signal from the CR delay circuit with the direct current reference voltage (15d),
wherein the timing circuit (15) is configured to be started by applying a clocking start signal (e) from the microcomputer (8) to the resistor (15a) at the start-up of the external oscillation circuit (14), and is configured to output a clocking end signal (f) from the comparator (15c).

2. A method of controlling an operation of a circuit breaker including a microcomputer (8) which includes an internal oscillation circuit (12) for generating an internal clock, for performing an operation in a low power consumption mode, wherein, according to the method,
power coming through a current transformer (3) from current flowing in an AC circuit (1) is supplied to an electric circuit including the microcomputer (8), and
the microcomputer (8) calculates a tripping time corresponding to a level of current flowing in the AC circuit (1), the method comprising further the following steps: setting, in a timing circuit (15), a time corresponding to an oscillation stable time from start-up of an external oscillation circuit (14) of generating an external clock with higher speed than that of the internal clock, the external oscillation circuit (14) provided outside of the microcomputer (8), up to a time when oscillation of the external oscillation circuit (14) gets stable, and
selectively supplying the internal clock from the internal oscillation circuit (12) as an operation clock of the microcomputer (8) at start-up of the microcomputer (8) and
the external clock from the external oscillation circuit (14) as the operation clock of the microcomputer (8) after elapse of the time to which the timing circuit (15) is set, wherein the timing circuit (15) is formed by a CR delay circuit including a resistor (15a) and a condenser (15b), a direct current reference voltage (15d) for detecting an output level of an output signal from the CR delay circuit, and a comparator (15c) which compares the output signal from the CR delay circuit with the direct current reference voltage (15d),
and the timing circuit (15) is started by applying a clocking start signal (e) from the microcomputer (8) to the resistor (15a) at the start-up of the external oscillation circuit (14), and outputs a clocking end signal (f) from the comparator (15c).

## Patentansprüche

1. Leistungsschalter, der einen Mikrocomputer (8) beinhaltet, der eine interne Oszillationsschaltung (12) zum Erzeugen eines internen Takts zum Durchführen eines Betriebs in einem Niedrig-Stromverbrauchsmodus beinhaltet, wobei der Leistungsschalter weiter einen Stromtransformator (3) umfasst, der so angeordnet ist, dass durch den Stromtransformator (3) kommender Strom aus in einer Wechselstromschaltung (1) fließendem Strom einer elektrischen Schaltung, die den Mikrocomputer (8) enthält, zugeführt wird, wobei
der Mikrocomputer (8) konfiguriert ist, eine Auslösezeit zu berechnen, die einem Pegel von Strom entspricht, der in der Wechselstromschaltung (1) fließt, wobei der Leistungsschalter weiter umfasst:
eine externe Oszillationsschaltung (14), die konfiguriert ist, einen externen Takt mit höherer Geschwindigkeit als demjenigen des internen Takts zu erzeugen, die außerhalb des Mikrocomputers (8) vorgesehen ist, um den Mikrocomputer (8) eine Operation in einem üblichen Betriebsmodus durchführen zu lassen,
eine Timing-Schaltung (15), die auf eine oszillationsstabile Zeit ab Herauffahren der externen Oszillationsschaltung (14) bis zu einer Zeit, wenn eine Oszillation der externen Oszillationsschaltung (14) stabil wird, voreingestellt wird, und eine Betriebstakt-Auswahlschaltung (13), die konfiguriert ist, den internen Takt aus der internen Oszillationsschaltung (12) als einen Betriebstakt des Mikrocomputers (8) beim Herauffahren des Mikrocomputers (8) und den externen Takt aus der externen Oszillationsschaltung (14) als den Betriebstakt des Mikrocomputers (8) nach Verstreichen der Zeit, auf welche die Timing-Schaltung (15) eingestellt ist, selektiv zuzuführen,
wobei
die Timing-Schaltung (15) außerhalb des Mikrocomputers (8) vorgesehen ist und die Betriebstakt-Auswahlschaltung (13) im Mikrocomputer (8) enthalten ist, und die Timing-Schaltung (15) durch eine CR-Verzögerungsschaltung, die einen Widerstand (15a) und einen Kondensator (15b) enthält, eine Gleichstrom-Referenzspannung (15d) zum Detektieren eines Ausgangspegels eines Ausgangssignals aus der CR-Verzögerungsschaltung, und einen Komparator (15c), der konfiguriert ist, das Ausgangssignal aus der CR-Verzögerungsschaltung mit der Gleichstrom-Referenzschaltung (15d) zu vergleichen, gebildet ist,
wobei die Timing-Schaltung (15) konfiguriert ist, durch Anlegen eines Taktungsstartsignals (e) aus dem Mikrocomputer (8) an den Widerstand (15a) beim Herauffahren der externen Oszillationsschaltung (14) gestartet zu werden, und konfiguriert ist, ein Taktungs-Endsignal (f) aus dem Komparator (15c) auszugeben.

2. Verfahren des Steuerns eines Betriebs eines Leistungsschalters, der einen Mikrocomputer (8) enthält, der eine interne Oszillationsschaltung (12) zum Erzeugen eines internen Takts zum Durchführen eines Betriebs in einem Niedrig-Leistungsstromverbrauchs-Modus beinhaltet, wobei gemäß dem Verfahren
durch den Stromtransformator (3) kommender Strom aus in einer Wechselstromschaltung (1) fließendem Strom einer elektrischen Schaltung, die den Mikrocomputer (8) enthält, zugeführt wird, und
der Mikrocomputer (8) eine Auslösezeit berechnet, die einem Pegel von Strom entspricht, der in der Wechselstromschaltung (1) fließt, wobei das Verfahren weiter die folgenden Schritte umfasst:
Einstellen, in einer Timing-Schaltung (15), einer Zeit entsprechend einer oszillations-stabilen Zeit ab Herauffahren einer externen Oszillationsschaltung (14) zum Erzeugen eines externen Takt mit höherer Geschwindigkeit als demjenigen des internen Takts, wobei die externe Oszillationsschaltung (14) außerhalb des Mikrocomputers (8) vorgesehen ist, bis zu einer Zeit, wenn die Oszillation der externen Oszillationsschaltung (14) stabil wird, und
selektives Zuführen des internen Takts aus der internen Oszillationsschaltung (12) als einen Betriebstakt des Mikrocomputers (8) beim Herauffahren des Mikrocomputers (8), und des externen Takts aus der externen Oszillationsschaltung (14) als den Betriebstakt des Mikrocomputers (8) nach Verstreichen der Zeit, auf welche die Timing-Schaltung (15) eingestellt ist,
wobei die Timing-Schaltung (15) durch eine CR-Verzögerungsschaltung, die einen Widerstand (15a) und einen Kondensator (15b) enthält, eine Gleichstrom-Referenzspannung (15d) zum Detektieren eines Ausgangspegels eines Ausgangssignals aus der CR-Verzögerungsschaltung, und einen Komparator (15c), der das Ausgangssignal aus der CR-Verzögerungsschaltung mit der Gleichstrom-Referenzschaltung (15d) vergleicht, gebildet ist,
und die Timing-Schaltung (15) durch Anlegen eines Taktungsstartsignals (e) aus dem Mikrocomputer (8) an den Widerstand (15a) beim Herauffahren der externen Oszillationsschaltung (14) gestartet wird, und ein Taktungs-Endsignal (f) aus dem Komparator (15c) ausgibt.

## Revendications

1. Disjoncteur incluant un micro-ordinateur (8) qui inclut un circuit d'oscillation interne (12) pour générer une horloge interne pour effectuer une opération dans un mode de faible consommation d'énergie, le disjoncteur comprenant en outre un transformateur de courant (3) agencé de telle sorte que de l'énergie passant par le transformateur de courant (3) issue de courant circulant dans un circuit CA (1) est fournie à un circuit électrique incluant le micro-ordinateur (8), dans lequel
le micro-ordinateur (8) est configuré pour calculer un temps de déclenchement correspondant à un niveau de courant circulant dans le circuit CA (1), le disjoncteur comprenant en outre
un circuit d'oscillation externe (14) qui est configuré pour générer une horloge externe présentant une vitesse plus élevée que celle de l'horloge interne, prévu à l'extérieur du micro-ordinateur (8) pour permettre au micro-ordinateur (8) de réaliser une opération dans un mode de fonctionnement habituel,
un circuit de temporisation (15) qui est préréglé sur un temps stable d'oscillation à partir du démarrage du circuit d'oscillation externe (14) jusqu'à un moment où l'oscillation du circuit d'oscillation externe (14) devient stable, et
un circuit de sélection d'horloge de fonctionnement (13) qui est configuré pour fournir sélectivement l'horloge interne à partir du circuit d'oscillation interne (12) en tant qu'horloge de fonctionnement du micro-ordinateur (8) au démarrage du micro-ordinateur (8) et l'horloge externe à partir du circuit d'oscillation externe (14) en tant qu'horloge de fonctionnement du micro-ordinateur (8) après écoulement du temps sur lequel le circuit de temporisation (15) est réglé,
dans lequel le circuit de temporisation (15) est prévu à l'extérieur du micro-ordinateur (8) et le circuit de sélection d'horloge de fonctionnement (13) est inclus dans le micro-ordinateur (8), et
le circuit de temporisation (15) est formé par un circuit à retard CR incluant une résistance (15a) et un condensateur (15b), une tension de référence de courant continu (15d) pour détecter un niveau de sortie d'un signal de sortie issu du circuit à retard CR, et un comparateur (15c) qui est configuré pour comparer le signal de sortie issu du circuit à retard CR avec la tension de référence de courant continu (15d),
dans lequel le circuit de temporisation (15) est configuré pour être démarré en appliquant un signal de démarrage d'horloge (e) à partir du micro-ordinateur (8) à la résistance (15a) au démarrage du circuit d'oscillation externe (14), et est configuré pour produire en sortie un signal de fin d'horloge (f) à partir du comparateur (15c).

2. Procédé de commande d'un fonctionnement d'un disjoncteur incluant un micro-ordinateur (8) qui inclut un circuit d'oscillation interne (12) pour générer une horloge interne, pour réaliser une opération dans un mode de faible consommation d'énergie, dans lequel, selon le procédé,
de l'énergie passant par un transformateur de courant (3) issue de courant circulant dans un circuit CA (1) est fournie à un circuit électrique incluant le micro-ordinateur (8), et
le micro-ordinateur (8) calcule un temps de déclenchement correspondant à un niveau de courant circulant dans le circuit CA (1), le procédé comprenant en outre les étapes suivantes :
le réglage, dans un circuit de temporisation (15), d'un temps correspondant à un temps stable d'oscillation à partir du démarrage d'un circuit d'oscillation externe (14) générant une horloge externe présentant une vitesse plus élevée que celle de l'horloge interne, le circuit d'oscillation externe (14) étant prévu à l'extérieur du micro-ordinateur (8), jusqu'à un moment où l'oscillation du circuit d'oscillation externe (14) devient stable, et
la fourniture sélective de l'horloge interne issue du circuit d'oscillation interne (12) en tant qu'horloge de fonctionnement du micro-ordinateur (8) au démarrage du micro-ordinateur (8) et
de l'horloge externe issue du circuit d'oscillation externe (14) en tant qu'horloge de fonctionnement du micro-ordinateur (8) après écoulement du temps sur lequel le circuit de temporisation (15) est réglé,
dans lequel le circuit de temporisation (15) est formé par un circuit à retard CR incluant une résistance (15a) et un condensateur (15b), une tension de référence de courant continu (15d) pour détecter un niveau de sortie d'un signal de sortie issu du circuit à retard CR, et un comparateur (15c) qui compare le signal de sortie issu du circuit à retard CR avec la tension de référence de courant continu (15d),
et le circuit de temporisation (15) est démarré en appliquant un signal de démarrage d'horloge (e) à partir du micro-ordinateur (8) à la résistance (15a) au démarrage du circuit d'oscillation externe (14), et produit en sortie un signal de fin d'horloge (f) à partir du comparateur (15c).
